# EUROPÄISCHE PATENTSCHRIFT

(11) **EP 4 201 633 B1**
(45) Veröffentlichungstag und Bekanntmachung des Hinweises auf die Patenterteilung: **14.08.2024**
(21) Anmeldenummer: 21217870.1
(22) Anmeldetag: 27.12.2021
(51) Int. Cl.: B29C 45/27

(54) **DRUCKSTÜCK FÜR SPRITZGIESSFORMEN**
PRESSURE PIECE FOR INJECTION MOULDS
PIÈCE DE PRESSION POUR MOULES POUR MOULAGE PAR INJECTION

(43) Veröffentlichungstag der Anmeldung: 28.06.2023
(73) Patentinhaber: Witosa GmbH, 35066 Frankenberg/Wangershausen (DE)
(72) Erfinder: Hallenberger, Martin, 35088 Frohnhausen (DE); Glittenberg, Torsten, 35066 Frankenberg (DE)
(74) Vertreter: Walther Bayer Faber Patentanwälte PartGmbB

(56) Entgegenhaltungen:
- CN-U- 209 775 380
- JP-A- H04 284 217
- US-A- 5 217 730
- US-A1- 2019 160 719

## Beschreibung

Die Erfindung betrifft ein Druckstück für Spritzgießformen, ausgebildet zur Anordnung an oder in Verbindung mit einem Heißkanalkörper, insbesondere einem sogenannten Heißkanalverteiler, an dem wenigstens eine Heißkanaldüse anbringbar ist, wobei das Druckstück einen Stützkörper zur Aufnahme von auf den Heißkanalkörper wirkenden Kräften aufweist.

### STAND DER TECHNIK

Der Heißkanalkörper ist zumeist als plattenförmiger Heißkanalverteiler ausgebildet, an dem eine oder mehrere Heißkanaldüsen aufgenommen werden. Innerhalb des Heißkanalkörpers sind Schmelzkanäle eingebracht, durch die plastifizierte Spritzgießmasse den Heißkanaldüsen zugeführt wird. Folgerichtig muss der Heißkanalkörper eine hohe Temperatur aufweisen, mit der die plastifizierte Kunststoffmasse schmelzflüssig vorgehalten werden kann. Daher sind am Heißkanalkörper Heizelemente angebracht, um diesen auf der erforderlichen Temperatur zu halten, beispielsweise auf 270°C.

Der Heißkanalkörper ist dabei -wenn auch in nicht notwendiger Weisezumeist eingefasst zwischen einer Aufspannplatte und einer Formplatte, wobei die Formplatte zum Spritzgießwerkzeug hin weist bzw. einen Teil desselben bildet, und die Heißkanaldüse durchläuft eine Öffnung in der Formplatte, um die plastifizierte Spritzgießmasse in die Spritzgießform einzuspritzen. Am Heißkanalkörper können mehrere Heißkanaldüsen vorgesehen sein, die jeweils mit einem Schmelzkanal verbunden sind, beispielsweise wenn mehrere Kunststoffteile in einem Spritzgießzyklus gespritzt werden. Die Aufspannplatte und die Formplatte weisen jedoch eine deutlich niedrigere Temperatur auf, wohingegen der Heißkanalkörper, der mit mehreren Heißkanaldüsen eine nicht unerhebliche Größe aufweisen kann, auf der Schmelztemperatur der plastifizierten Kunststoffmasse gehalten werden muss. Folgerichtig ergibt sich eine Isolieraufgabe, den Heißkanalkörper thermisch gegen die Aufspannplatte und gegen die Formplatte zu isolieren. Hierfür sind die Aufspannplatte und die Formplatte beabstandet zum Heißkanalkörper eingerichtet, um einen direkten Kontakt zu vermeiden, allerdings wirken auf die Formplatte erhebliche Kräfte, die gegen den Heißkanalkörper und schließlich gegen die Aufspannplatte abgestützt werden müssen. Die Funktion der Abstandshaltung und der Kraftübertragung wird mittels meist mehrerer Druckstücke übernommen, die zwischen dem Heißkanalkörper und der Aufspannplatte und/oder zwischen der Formplatte und dem Heißkanalkörper angeordnet sind und eine definierte Höhe besitzen, um die jeweiligen Abstände aufrecht zu erhalten. Die Druckschrift US 2019/160719 A1 zeigt einige der Merkmale des beigefügten Anspruchs 1.

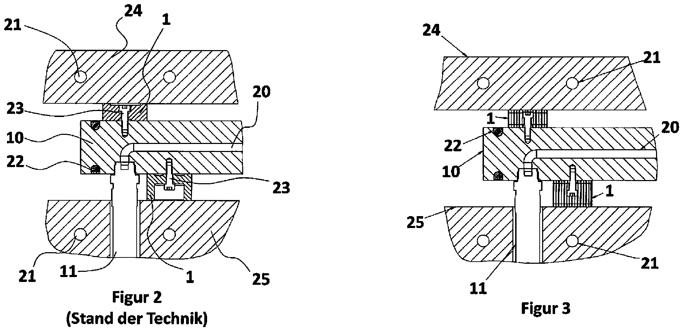

Wie in Figur 2 als Beispiel eines Standes der Technik gezeigt, sind zur Anordnung und Abstandshaltung des Heißkanalkörpers 10 Druckstücke 1 vorgesehen, die als Distanzelemente einen Stützkörper 12 bilden, sodass der Heißkanalkörper 10 einen definierten Abstand zur hinterseitigen Aufspannplatte 24 und zur vorderseitigen Formplatte 25 einhält, wobei durch die zur Kavität im Werkzeug hin weisende Formplatte 25 die Heißkanaldüsen 11 hindurchgeführt sind. Der Heißkanalkörper 10 wird dabei mittels Heizelementen 22 beheizt, die den Heißkanalkörper 10 beispielsweise auf eine Temperatur von 250° C bis 300° C aufheißen und die Temperatur aufrecht erhalten, während in der Aufspannplatte 24 und in der Formplatte 25 Kühlwasserkanäle 21 eingebracht sind, um diese zu kühlen.

So kann bei einer hohen Temperatur des Heißkanalkörpers 10, die der Plastifizierungstemperatur einer Kunststoffmasse entspricht, welche durch den Schmelzkanal 20 zur Heißkanaldüse 11 geführt wird, die Funktion der Spritzgießform aufrechterhalten werden, während die Aufspannplatte 24 und die Formplatte 25 mit Kühlwasserkanälen 21 gekühlt werden.

Die Druckstücke 1 sind sowohl zwischen dem Heißkanalkörper 10 und der Aufspannplatte 24 als auch zwischen dem Heißkanalkörper 10 und der Formplatte 25 angeordnet und definieren einen jeweils bestimmten Abstand. Die Druckstücke 1 sind hierfür mit Schraubelementen 23 an dem Heißkanalkörper 10 angeschraubt.

Im Betrieb der Spritzgießform treten hohe Kräfte auf, die von der Formplatte 25 über die Druckstücke 1 auf den Heißkanalkörper 10 wirken, wobei ebensolche Kräfte auch vom Heißkanalkörper 10 an die Aufspannplatte 24 über die weiteren Druckstücke 1 weitergeleitet werden. Folglich müssen die Druckstücke 1 mechanisch hoch belastbar ausgebildet werden, da Druckkräfte von bis zu mehreren tausend Kilonewton auftreten können, die von der Formplatte 25 über die Druckstücke 1 auf den Heißkanalkörper 10 wirken können. Begründet sind diese hohen Kräfte insbesondere durch die notwendige Schließkraft der Spritzgießform, die in die Aufspannplatte abgeleitet werden muss.

Die DE 2 160 535 A1 offenbart Druckstücke für Spritzgießformen, die beispielhaft als Spannmuttern ausgebildet sind und die zur Anordnung zwischen einem Heißkanalkörper und den jeweiligen Umbauteilen dienen, insbesondere also einer Aufspannplatte und einer Formplatte. Die Druckstücke weisen dabei einen Stützkörper zur Aufnahme von auf den Heißkanalkörper wirkenden Kräften auf.

Nachteilhafterweise ist über die Stützkörper der Druckstücke ein erheblicher Wärmefluss zwischen dem Heißkanalkörper und der Aufspannplatte und/oder der Formplatte festzustellen. Einerseits muss der Heißkanalkörper auf der Temperatur gehalten werden, um die Kunststoffmasse im plastifizierten Zustand zu erhalten, und auf der anderen Seite müssen die Aufspannplatte und die Formplatte entsprechend gekühlt werden. Insofern ergibt sich auf der einen Seite eine Heizleistung zur Temperierung des Heißkanalkörpers und auf der anderen Seite erfolgt eine Kühlleistung zur Entwärmung der Aufspannplatte und/oder der Formplatte. Die Druckstücke müssen zudem mechanisch hoch belastbar ausgeführt sein, um die erheblichen Druckkräfte aufnehmen zu können, die im Betrieb des Werkzeugs auf den Heißkanalkörper wirken können.

### OFFENBARUNG DER ERFINDUNG

Aufgabe der Erfindung ist eine verbesserte Ausführung eines Druckstückes zur Anordnung an oder in Verbindung mit einem Heißkanalkörper einer Spritzgießform, insbesondere also eines Heißkanalverteilers, einer Verteilerplatte oder eines Verteilerblocks. Das Druckstück soll dabei so weitergebildet werden, dass hohe Betriebskräfte der Spritzgussform über die Druckstücke abgestützt werden können, zugleich soll der Wärmefluss vom Heißkanalkörper in die Aufspannplatte und/oder in die Formplatte minimiert werden.

Diese Aufgabe wird ausgehend von einem Druckstück gemäß dem Oberbegriff des Anspruches 1 in Verbindung mit den kennzeichnenden Merkmalen gelöst. Weiterhin wird die Aufgabe ausgehend von einer Spritzgießform gemäß dem Oberbegriff des Anspruches 15 mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass der Stützkörper des Druckstückes mittels eines generativen Fertigungsverfahrens hergestellt ist, und eine Hohlkammerstruktur aufweist, wobei die Hohlkammerstruktur des Stützkörpers Stege und zwischen den Stegen ausgebildete Öffnungen aufweist, wobei die Stege der Hohlkammerstruktur eine Wanddicke aufweisen, die sich ausgehend von einem Mittelbereich in Richtung zu Anlageflächen des Druckstückes vergrößert.

Generative Fertigungsverfahren werden auch als 3D-Druckverfahren bezeichnet, und als ein bevorzugtes generatives Fertigungsverfahren zur Herstellung des Druckstückes kann das SLM- (Selective Laser Melting) Verfahren betrachtet werden. Ein solches generatives Fertigungsverfahren ermöglicht eine freie geometrische Ausgestaltung des Stützkörpers aus einem metallischen Werkstoff, die über die Möglichkeiten einer konventionellen Fertigung hinausgeht. Dabei kann der besondere Vorteil genutzt werden, dass das Druckstück mit einem Stützkörper ausgeführt werden kann, der so ausgestaltet ist, dass der Stützkörper hohe mechanische Kräfte abstützen kann, jedoch zugleich eine sehr gute Wärmeisolierung des Heißkanalkörpers gegenüber der Aufspannplatte und/oder gegenüber der Formplatte ermöglicht.

Das im generativen Fertigungsverfahren hergestellte Druckstück kann im Rahmen der Erfindung als Einzelteil bereitgestellt werden, wobei es auch denkbar ist, dass das Druckstück beispielsweise auf der Oberfläche des Heißkanalkörpers, der Aufspannplatte und/oder der Formplatte im generativen Verfahren aufbaubar ist. Damit kann das Druckstück auch einteilig mit dem Heißkanalkörper, der Aufspannplatte und/oder der Formplatte oder einem sonstigen Bauteil einer Spritzgießform ausgebildet sein.

So ist es insbesondere vorteilhaft möglich, dass der Stützkörper einteilig ausgebildet ist. Bevorzugt wird der einteilige Stützkörper mit einer Hohlkammerstruktur im generativen Fertigungsverfahren hergestellt, und die Hohlkammerstruktur ist so ausgebildet, dass hohe Stützkräfte in das Druckstück eingeleitet werden können, zugleich aber der Wärmeleitungsquerschnitt gering ist, um eine Wärmeleitung von dem Heißkanalkörper an die Aufnahmeplatte und/oder die Formplatte zu minimieren.

Der Stützkörper ist mit einer ersten ausgeführten Anlagefläche und einer zweiten parallel zur ersten Anlagefläche ausgebildeten ebenfalls planen Anlagefläche ausgeführt, wobei sich die Hohlkammerstruktur zwischen der ersten und der zweiten Anlagefläche im Wesentlichen gleichförmig erstreckt. Die Hohlkammerstruktur wird erfindungsgemäß dadurch geschaffen, dass diese durch dünne Stege gebildet ist, mit denen jeweilige Öffnungen umschlossen werden. So sind die Öffnungen als Hohlkammern zwischen den Stegen gebildet, wobei die Stege plane Flächenabschnitte bilden können oder die Stege können auch Krümmungen oder ungleichförmige Wanddicken aufweisen.

Insbesondere kann die Hohlkammerstruktur eine Wabenstruktur bilden, wobei die Waben jeweils eine 6-eckige Grundform besitzen, die sich im Grundquerschnitt der Öffnungen zwischen den Stegen ergeben. Ebenfalls ist es denkbar, dass die Hohlkammerstrukturen zylinderförmige Öffnungen aufweisen, zwischen denen die Stege gewissermaßen ein Vollmaterial bilden, und insofern keine gleichförmige Wanddicke besitzen. Hingegen können die Stege bei einer Wabenstruktur eine gleichförmige Wanddicke aufweisen, und die Hohlkammern, also die zylinderförmigen Öffnungen oder die 6-eckigen Wabenstruktur-Öffnungen erstrecken sich gleichförmig zwischen der ersten Anlagefläche und der zweiten Anlagefläche. So wird ein Stützkörper geschaffen, der hohe Kräfte zwischen den beiden Anlageflächen aufnehmen kann, der zugleich jedoch nur eine geringe gesamte Materialquerschnittsfläche aufweist, sodass bei der Aufnahme von hohen Kräften dennoch ein nur geringer Wärmeübergang von der ersten Anlagefläche zur zweiten Anlagefläche stattfindet, insofern also von dem Heißkanalkörper in die Aufspannplatte bzw. in die Formplatte nur eine minimale Wärmemenge pro Zeit übergeht.

Auch ist es von Vorteil, wenn der Stützkörper zwischen der ersten und der zweiten Anlagefläche eine 6-eckige und insbesondere geschlossene Außenkontur aufweist. Durch eine geschlossene Außenkontur kann die Druckbelastbarkeit des Stützkörpers weiter erhöht werden, wobei eine 6-eckige Außenkontur des Stützkörpers dann besonders vorteilhaft ist, wenn die Hohlkammerstruktur eine Wabenstruktur aufweist.

Weiterhin kann der Stützkörper ausgehend von der ersten Anlagefläche eine mittige Vertiefung aufweisen, und wobei mit weiterem Vorteil ein Durchgang zwischen dem Boden der Vertiefung und der zweiten Anlagefläche eingebracht ist, um ein Befestigungsmittel durch diesen Durchgang hindurchzuführen. Bevorzugt ist das Befestigungsmittel in Form eines Schraubelementes ausgebildet, wobei der Stützkörper an dem Heißkanalkörper mit der zweiten Anlagefläche anliegend angeordnet werden kann. Damit ergibt sich der Vorteil, dass eine erhöhte Wärmeleitung durch das Schraubelement nur bis in den unteren Bereich des Druckstückes hinein stattfindet, sodass der Boden der Vertiefung näher zur zweiten Anlagefläche hin weist als zur ersten Anlagefläche. Somit verkürzt sich die Länge des Schraubelementes, sodass ein Durchheizen des Stützkörpers des Druckstückes durch das Schraubelement minimiert wird.

Die Stege der Hohlkammerstruktur weisen erfindungsgemäß im Bereich der Auflageflächen eine Wanddicke auf, die größer ist als über der Wesentlichen Länge im Mittelbereich, sodass sich in Richtung der Anlageflächen die Wanddicke leicht vergrößert. Dadurch wird der Vorteil geschaffen, dass die Anlageflächen, die durch die Querschnittsstruktur, mithin also das Querschnittsprofil, der Hohlkammerstruktur gebildet ist. Eine Vergrößerung der Wanddicke der Stege bis in die Auflagefläche hinein hat insofern eine Vergrößerung der Anlageflächen zur Folge, sodass ein besserer Kraftübergang von dem Stützkörper in die Aufspannplatte bzw. in die Formplatte stattfinden kann, da sich die effektive Kontaktfläche durch die dickeren Stege der Hohlkammerstruktur vergrößert.

Der Stützkörper weist beispielsweise eine Abmessung auf, gemäß der der Abstand zwischen den beiden Anlageflächen ein Maß von 10 mm bis 30 mm aufweist. Konstruktionsbedingt können auch Abmessungen für den Stützkörper vorgesehen sein, die beispielsweise zwischen 5 mm bis 50 mm liegen. Weist der Stützkörper eine 6-eckige Außenkontur auf, so kann das Maß zwischen zwei Planflächen der 6-eckigen Außenkontur beispielsweise 20 mm bis 30 mm betragen, vorzugsweise 24 mm bis 28 mm und/oder 26 mm. Für den Großformenbau ist es im Rahmen der vorliegenden Erfindung aber auch denkbar, dass das Druckstück Hauptabmessungen von bis zu 200mm oder auch deutlich darüber aufweist.

Weiterhin ist es von Vorteil, wenn die Wanddicke der Stege über der wesentlichen Höhe des Druckkörpers zwischen den beiden Anlageflächen 0,2 mm bis 1 mm und/oder 0,2 mm bis 0,4 mm und bevorzugt 0,3 mm und/oder etwa oder genau 0,3 mm beträgt. Angrenzend an die Anlageflächen kann die Wanddicke der Stege über die letzten, beispielsweise 2 verbleibenden mm bis zur Anlagefläche vergrößert werden bis auf 0,45 mm bis 0,6 mm und vorzugsweise etwa oder genau 0,52 mm.

Der Werkstoff des Stützkörpers umfasst vorzugsweise einen Werkzeugstahl, wobei der Stützkörper insbesondere materialeinheitlich und einteilig ausgebildet ist. Werkzeugstahl lässt sich erfindungsgemäß mittels eines generativen Fertigungsverfahrens verarbeiten, insbesondere im SLM-Verfahren. Vorzugsweise weist der Werkstoff des Stützkörpers einen Stahl mit der Spezifikation 1.2709 oder X3NiCoMoTi18-9-5 und/oder einen Titanwerkstoff Ti6AI4V auf. Weitere Werkstoffe, die in einem generativen Fertigungsverfahren hergestellt werden können, sind im Rahmen der vorliegenden Erfindung ebenfalls mit umfasst.

Die Erfindung richtet sich weiterhin auf eine Spritzgießform mit wenigstens einem Druckstück, das zur Anordnung an oder in Verbindung mit einem Heißkanalkörper der Spritzgießform ausgebildet ist, an dem wenigstens eine Heißkanaldüse anbringbar ist, wobei das Druckstück einen Stützkörper zur Aufnahme von auf den Heißkanalkörper wirkenden Kräften aufweist. Erfindungsgemäß ist dabei der Stützkörper mittels eines generativen Fertigungsverfahrens hergestellt. Die weiteren obenstehend aufgeführten Merkmale und zugehörigen Vorteile für das Druckstück sind für die Spritzgießform mit einem solchen Druckstück ebenfalls möglich und vorteilhaft umsetzbar.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Heißkanalkörpers, ausgeführt als plattenförmiger Heißkanalverteiler, aufweisend mehrere Heißkanaldüsen, wobei am Heißkanalkörper erfindungsgemäß ausgeführte Druckstücke angeordnet sind,
- Figur 2: eine Detailansicht der Anordnung des Heißkanalkörpers zwischen einer Aufspannplatte und einer Fronplatte mit Druckstücken, wie diese aus dem Stand der Technik bekannt sind,
- Figur 3: eine Detailansicht der Anordnung des Heißkanalkörpers zwischen der Aufspannplatte und der Formplatte mit erfindungsgemäß ausgeführten Druckstücken,
- Figur 4: eine perspektivische Ansicht des erfindungsgemäß ausgeführten Druckstückes,
- Figur 5: eine Draufsicht auf das erfindungsgemäße Druckstück, und
- Figur 6: eine Querschnittsansicht des erfindungsgemäßen Druckstückes entlang der Querschnittslinie A-A gemäß Figur 5.

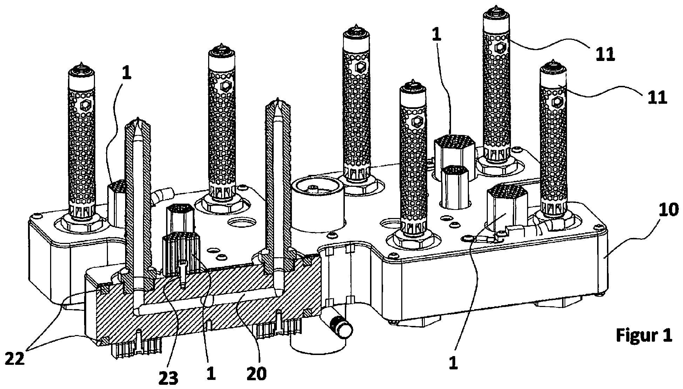

In Figur 1 ist in einer perspektivischen Ansicht ein Heißkanalkörper 10 in Gestalt eines plattenförmigen Heißkanalverteilers gezeigt. An dem Heißkanalkörper 10 sind mehrere Heißkanaldüsen 11 angeordnet, die über im Heißkanalkörper 10 ausgebildete Schmelzkanäle 20 mit einer plastifizierten Kunststoffschmelze versorgt werden können.

Um den plastifizierten Zustand des Kunststoffes auch beim Durchtritt durch den Schmelzkanal 20 zu erhalten, weist der Heißkanalkörper 10 Heizelemente 22 auf, die diesen auf einer Temperatur von beispielsweise 270° C halten.

Der gezeigte Heißkanalkörper 10 wird in den Bauteilverbund einer Spritzgießform eingesetzt, wofür Druckstücke 1 vorgesehen sind, um den Heißkanalkörper 10 mit einem bestimmten Abstand zu den Umbauteilen einzurichten. Insofern weist der Heißkanalkörper 10 mehrere mittels Schraubelementen 23 aufgeschraubte Druckstücke 1 auf, wobei die gezeigten Druckstücke 1 eine erfindungsgemäße Ausgestaltung aufweisen.

Figur 2 bildet Stand der Technik und wurde im obenstehenden, einleitenden Teil bereits beschrieben.

Figur 3 zeigt die Anordnung des plattenförmigen Heißkanalkörpers 10 zwischen einer Aufspannplatte 24 und einer Formplatte 25, wobei letztere einen Teil des eigentlichen Spritzgusswerkzeugs bildet. Der Heißkanalkörpers 10 kann abweichend auch eine kubische Form, eine mehreckige Plattenform oder eine sonstige Form aufweisen und ist sowohl zur Aufspannplatte 24 als auch zur Formplatte 25 mit einem Druckstück 1 in einem bestimmten Abstand eingesetzt, wobei die Druckstücke 1 mittels Schraubelementen 23 am Heißkanalkörper 10 angeschraubt sind. Die Querschnittsansicht zeigt zudem den Schmelzkanal 20 zur Versorgung der Heißkanaldüse 11.

Der Heißkanalkörper 10 wird mittels Heizelementen 22 aufgeheizt, während die Aufspannplatte 24 und die Formplatte 25 mittels Kühlwasserkanälen 21 gekühlt werden, die mit einem Kühlmedium durchströmbar sind.

Die Ansicht verdeutlicht die Aufgabe der thermischen Isolierung, die durch die Druckstücke 1 umgesetzt werden soll. Insbesondere ist der heiße Heißkanalkörper 10 zu isolieren gegenüber der Aufspannplatte 24 und der Formplatte 25, zugleich müssen jedoch hohe Druckkräfte zwischen der Formplatte 25 und dem Heißkanalkörper 10 bzw. der Aufspannplatte 24 aufgenommen werden. Folglich müssen die Druckstücke 1 mechanisch stabil ausgeführt werden, während diese jedoch eine möglichst gute Wärmeisolierung bieten sollen, sodass der Heißkanalkörper 10 nicht unnötig an der Aufspannplatte 24 und/oder der Formplatte 25 auskühlt.

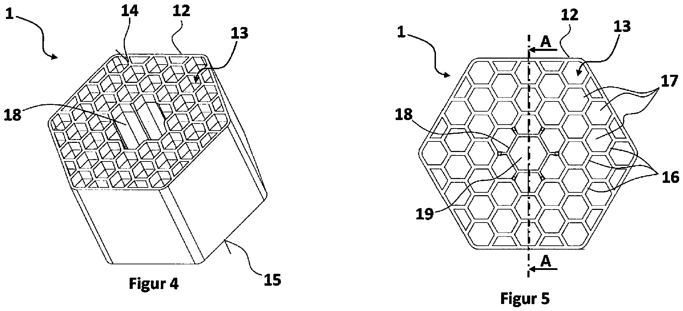

Figur 4 zeigt eine perspektivische Ansicht des erfindungsgemäß hergestellten Druckstückes 1 basierend auf einem generativen Fertigungsverfahren. Das Druckstück 1 weist einen Stützkörper 12 auf, der oberseitig und unterseitig jeweils begrenzt ist durch eine Anlagefläche 14, 15. Mit den Anlageflächen 14, 15 kann das Druckstück 1 an dem Heißkanalkörper 10 bzw. an der Aufspannplatte 24 und/oder an der Formplatte 25 anliegen.

Der Stützkörper 12 ist wie auch in Figur 5 gezeigt mit einer Hohlkammerstruktur ausgestaltet, wobei die Hohlkammerstruktur 13 Stege 16 und zwischen den Stegen ausgebildete Öffnungen 17 umfasst. Die Struktur ist dabei so ausgeführt, dass die Stege 16 mit den Öffnungen 17 eine Wabenstruktur bilden, derart, dass die Öffnungen 17 eine 6-eckige Querschnittsform aufweisen.

Mittig weist der Stützkörper 12 eine Vertiefung 18 mit einem innenseitigen Durchgang 19 auf, sodass ein Schraubelement mit einem Schraubenkopf in die Vertiefung 18 eingesetzt und der Schraubenschaft durch den Durchgang 19 hindurchgeführt werden kann.

Der Außenumfang des Stützkörpers 12 weist ebenfalls eine 6-eckige Struktur auf, wobei die Hohlkammerstruktur 13 über der Dicke des Stützkörpers 12 von Anlagefläche 14 zu Anlagefläche 15 gleichförmig ausgeführt ist.

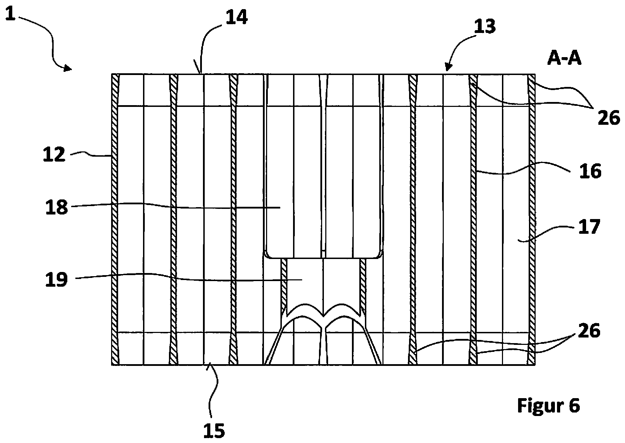

Figur 6 zeigt die Querschnittsansicht des Stützkörpers 12 des Druckstückes 1 entlang der Schnittlinie A-A gemäß Figur 5. Die Darstellung zeigt quergeschnittene Stege 16 und zugehörige, dazwischen liegende Öffnungen 17 der Hohlkammerstruktur 13. Dadurch wird noch einmal die gleichförmige Ausgestaltung der Hohlkammerstruktur 13 von der ersten Anlagefläche 14 bis zur gegenüber liegenden zweiten Anlagefläche 15 verdeutlicht, wobei die Stege 16 bis an die Anlageflächen 14 und 15 ausgebildete, an diese heranragende Verdickungen 26 aufweisen, sodass die Auflageflächen 14 und 15 eine größere Fläche aufweisen als der mittige Querschnitt des Stützkörper 12. Die Darstellung zeigt weiterhin die Vertiefung 18 mit dem Durchgang 19 zur Aufnahme des Schraubelementes.

Insbesondere ist damit dargestellt, dass die Stege 16 der Hohlkammerstruktur 13 erfindungsgemäß im Bereich der Auflageflächen 14, 15 eine Wanddicke auf, die größer ist als über der Wesentlichen Länge im Mittelbereich, sodass sich in Richtung der Anlageflächen 14, 15 die Wanddicke leicht vergrößert. Dadurch wird der Vorteil geschaffen, dass die Anlageflächen, die durch die Querschnittsstruktur, mithin also das Querschnittsprofil, der Hohlkammerstruktur gebildet ist. Eine Vergrößerung der Wanddicke der Stege 16 bis in die Auflagefläche 14, 15 hinein hat insofern eine Vergrößerung der Anlageflächen 14, 15 zur Folge, sodass ein besserer Kraftübergang von dem Stützkörper 12 in die Aufspannplatte bzw. in die Formplatte stattfinden kann, da sich die effektive Kontaktfläche durch die dickeren Stege 16 der Hohlkammerstruktur 13 vergrößert.

Die Erfindung ist in den beigefügten Ansprüchen definiert.

### Bezugszeichenliste:

- 1: Druckstück
- 10: Heißkanalkörper
- 11: Heißkanaldüse
- 12: Stützkörper
- 13: Hohlkammerstruktur
- 14: Anlagefläche
- 15: Anlagefläche
- 16: Steg
- 17: Öffnung
- 18: Vertiefung
- 19: Durchgang
- 20: Schmelzkanal
- 21: Kühlwasserkanal
- 22: Heizelement
- 23: Schraubelement
- 24: Aufspannplatte
- 25: Formplatte
- 26: Verdickung

## Patentansprüche

1. Druckstück (1) für Spritzgießformen, ausgebildet zur Anordnung an oder in Verbindung mit einem Heißkanalkörper (10), an den wenigstens eine Heißkanaldüse (11) anbringbar ist, wobei das Druckstück (1) einen Stützkörper (12) zur Aufnahme von auf den Heißkanalkörper (10) wirkenden Kräften aufweist,
- der Stützkörper (12) mittels eines generativen Fertigungsverfahrens hergestellt ist,
- der Stützkörper (12) eine Hohlkammerstruktur (13) aufweist,
- **dadurch gekennzeichnet, dass**
die Hohlkammerstruktur (13) des Stützkörpers (12) Stege (16) und zwischen den Stegen (16) ausgebildete Öffnungen (17) aufweist,
- die Stege (16) der Hohlkammerstruktur (13) eine Wanddicke aufweisen, die sich ausgehend von einem Mittelbereich in Richtung zu Anlageflächen (14, 15) des Druckstückes (1) vergrößert.

2. Druckstück (1) nach Anspruch 1,
**dadurch gekennzeichnet,**
**dass** der Stützkörper (12) einteilig ausgebildet ist.

3. Druckstück (1) nach Anspruch 1 oder 2,
**dadurch gekennzeichnet,**
**dass** der Stützkörper (12) eine erste Anlagefläche (14) und eine zweite parallel zur ersten Anlagefläche (14) ausgebildete Anlagefläche (15) aufweist, wobei sich die Hohlkammerstruktur (13) zwischen der ersten und der zweiten Anlagefläche (14, 15) im Wesentlichen gleichförmig erstreckt.

4. Druckstück (1) nach einem der vorgenannten Ansprüche,
**dadurch gekennzeichnet,**
**dass** die Hohlkammerstruktur (13) eine Wabenstruktur aufweist, wobei die Waben jeweils eine sechseckige Grundform aufweisen.

5. Druckstück (1) nach einem der vorgenannten Ansprüche,
**dadurch gekennzeichnet,**
**dass** der Stützkörper (12) zwischen der ersten und der zweiten Anlagefläche (14, 15) eine sechseckige und/der geschlossene Außenkontur aufweist.

6. Druckstück (1) nach einem der vorgenannten Ansprüche,
**dadurch gekennzeichnet,**
**dass** der Stützkörper (12) ausgehend von der ersten Anlagefläche (14) eine mittige Vertiefung (18) aufweist und wobei ein Durchgang (19) zwischen dem Boden der Vertiefung und der zweiten Anlagefläche (15) eingebracht ist, um ein Befestigungsmittel durch diese hindurchzuführen.

7. Druckstück (1) nach einem der vorgenannten Ansprüche,
**dadurch gekennzeichnet,**
**dass** der Stützkörper (12) eine Abmessung aufweist, gemäß der der Abstand zwischen den beiden Anlageflächen (14, 15) ein Maß von 10mm bis 30mm aufweist.

8. Druckstück (1) nach einem der vorgenannten Ansprüche,
**dadurch gekennzeichnet,**
**dass** die Stege (16) der Hohlkammerstruktur (13) über ihrer wesentlichen Länge zwischen den beiden Anlageflächen (14, 15) eine Wanddicke von 0,2mm bis 0,4mm und bevorzugt 0,3mm aufweisen und/oder dass die Wanddicke der Stege (16) der Hohlkammerstruktur (13) angrenzend an die oder im Bereich der Anlageflächen (14, 15) 0,45mm bis 0,6mm und bevorzugt 0,52mm aufweist.

9. Druckstück (1) nach einem der vorgenannten Ansprüche,
**dadurch gekennzeichnet,**
**dass** der Werkstoff des Stützkörpers (12) einen Werkzeugstahl aufweist.

10. Druckstück (1) nach einem der vorgenannten Ansprüche,
**dadurch gekennzeichnet,**
**dass** Werkstoff des Stützkörpers (12) einen Stahl mit der Spezifikation 1.2709 bzw. X3NiCoMoTi18-9-5 und/oder ein Titanwerkstoff Ti6AI4V aufweist.

11. Druckstück (1) nach einem der vorgenannten Ansprüche,
**dadurch gekennzeichnet,**
**dass** die Anlageflächen (14, 15) aus den Stirnflächen der Stege (16) ausgebildet sind.

12. Spritzgießform mit wenigstens einem Druckstück (1), das zur Anordnung an oder in Verbindung mit einem Heißkanalkörper (10) der Spritzgießform ausgebildet ist, an den wenigstens eine Heißkanaldüse (11) anbringbar ist, wobei das Druckstück (1) einen Stützkörper (12) zur Aufnahme von auf den Heißkanalkörper (10) wirkenden Kräften aufweist,
- der Stützkörper (12) mittels eines generativen Fertigungsverfahrens hergestellt ist,
- der Stützkörper (12) eine Hohlkammerstruktur (13) aufweist,
- **dadurch gekennzeichnet, dass**
die Hohlkammerstruktur (13) des Stützkörpers (12) Stege (16) und zwischen den Stegen (16) ausgebildete Öffnungen (17) aufweist,
- die Stege (16) der Hohlkammerstruktur (13) eine Wanddicke aufweisen, die sich ausgehend von einem Mittelbereich in Richtung zu Anlageflächen (14, 15) des Druckstückes (1) vergrößert.

## Claims

1. A pressure element (1) for injection molds configured for arrangement at or in connection to a hot runner body (10) to which at least one hot runner nozzle (11) is attachable, wherein the pressure element (1) has a support body (12) to receive forces acting on the hot runner body (10),
- the support body (12) is manufactured by means of a generative production process; and
- the support body (12) has a hollow chamber structure (13),
u **characterized in that**
- the hollow chamber structure (13) of the support body (12) has webs (16) and openings (17) formed between the webs (16); and
- the webs (16) of the hollow chamber structure (13) have a wall thickness that increases starting from a center region in the direction toward contact surfaces (14, 15) of the pressure element (1).

2. A pressure element (1) in accordance with claim 1,
**characterized in that**
the support body (12) is formed in one part.

3. A pressure element (1) in accordance with claim 1 or claim 2,
**characterized in that**
the support body (12) has a first contact surface (14) and a second contact surface (15) formed in parallel with the first contact surface (14), with the hollow chamber structure (13) extending substantially uniformly between the first and second contact surfaces (14, 15).

4. A pressure element (1) in accordance with one of the preceding claims, **characterized in that**
the hollow chamber structure (13) has a honeycomb structure, with the honeycombs each having a hexagonal basic shape.

5. A pressure element (1) in accordance with one of the preceding claims, **characterized in that**
the support body (12) has a hexagonal and/or closed outer contour between the first and second contact surfaces (14, 15).

6. A pressure element (1) in accordance with one of the preceding claims, **characterized in that**
the support body (12) has a center recess (18) starting from the first contact surface; and **in that** a passage (19) being introduced between the base of the recess and the second contact surface (15) to conduct a fastening means through it.

7. A pressure element (1) in accordance with one of the preceding claims, **characterized in that**
the support body (12) has a dimension in accordance with which the distance between the two contact surfaces (14, 15) has a dimension of 10 mm to 30 mm.

8. A pressure element (1) in accordance with one of the preceding claims, **characterized in that**
the webs (16) of the hollow chamber structure (13) have a wall thickness over their main length between the two contact surfaces (14, 15) of 0.2 mm to 0.4 mm and preferably 0.3 mm; and/or **in that** the wall thickness of the webs (16) of the hollow chamber structure (13) comprises 0.45 mm to 0.6 mm and preferably 0.52 mm adjacent to or in the region of the contact surfaces (14, 15).

9. A pressure element (1) in accordance with one of the preceding claims, **characterized in that**
the material of the support body (12) comprises a tool steel.

10. A pressure element (1) in accordance with one of the preceding claims, **characterized in that**
the material of the support body (12) comprises a steel of the specification 1.2709 or X3NiCoMoTi18-9-5 and/or a titanium material Ti6AI4V.

11. A pressure element (1) in accordance with one of the preceding claims, **characterized in that**
the contact surfaces (14, 15) are formed from the front surfaces of the webs (16).

12. An injection mold having at least one pressure element (1) that is configured for arrangement at or in connection to a hot runner body (10) to which at least one hot runner nozzle (11) is attachable, wherein the pressure element (1) has a support body (12) to receive forces acting on the hot runner body (10),
- the support body (12) is manufactured by means of a generative production process; and
- the support body (12) has a hollow chamber structure (13), **characterized in that**
- the hollow chamber structure (13) of the support body (12) has webs (16) and openings (17) formed between the webs (16); and
- the webs (16) of the hollow chamber structure (13) have a wall thickness that increases starting from a center region in the direction toward the contact surfaces (14, 15).

## Revendications

1. Pièce de pression (1) pour moules pour moulage par injection, conçue pour être agencée sur ou en liaison avec un corps de canal chaud (10), sur lequel au moins une buse de canal chaud (11) peut être montée, la pièce de pression (1) présentant un corps de support (12) destiné à absorber des forces agissant sur le corps de canal chaud (10),
- le corps de support (12) étant fabriqué au moyen d'un procédé de fabrication additive,
- le corps de support (12) présentant une structure alvéolée (13),
- **caractérisée**
**en ce que**
la structure alvéolée (13) du corps de support (12) présente des cloisons (16) et des ouvertures (17) réalisées entre les cloisons (16),
- les cloisons (16) de la structure alvéolée (13) présentent une épaisseur de paroi qui augmente à partir d'une zone centrale en direction de surfaces d'appui (14, 15) de la pièce de pression (1).

2. Pièce de pression (1) selon la revendication 1,
**caractérisée en ce que**
le corps de support (12) est réalisé d'un seul tenant.

3. Pièce de pression (1) selon la revendication 1 ou 2,
**caractérisée en ce que**
le corps de support (12) présente une première surface d'appui (14) et une seconde surface d'appui (15) réalisée parallèle à la première surface d'appui (14), la structure alvéolée (13) s'étendant sensiblement de manière uniforme entre la première et la seconde surface d'appui (14, 15).

4. Pièce de pression (1) selon l'une des revendications précédentes, **caractérisée en ce que**
la structure alvéolée (13) présente une structure en nids d'abeilles, les nids d'abeilles présentant chacun une forme de base hexagonale.

5. Pièce de pression (1) selon l'une des revendications précédentes, **caractérisée en ce que**
le corps de support (12) présente un contour externe hexagonal et/ou fermé entre la première et la seconde surface d'appui (14, 15).

6. Pièce de pression (1) selon l'une des revendications précédentes, **caractérisée en ce que**
le corps de support (12) présente, partant de la première surface d'appui (14), un creux (18) central et dans laquelle un passage (19) est situé entre le fond du creux et la seconde surface d'appui (15) pour faire passer un moyen de fixation à travers celle-ci.

7. Pièce de pression (1) selon l'une des revendications précédentes, **caractérisée en ce que**
le corps de support (12) présente une dimension selon laquelle la distance entre les deux surfaces d'appui (14, 15) présente une valeur de 10 mm à 30 mm.

8. Pièce de pression (1) selon l'une des revendications précédentes, **caractérisée en ce que**
les cloisons (16) de la structure alvéolée (13) présentent, sur l'essentiel de leur longueur entre les deux surfaces d'appui (14, 15), une épaisseur de paroi de 0,2 mm à 0,4 mm et de préférence de 0,3 mm et/ou **en ce que** l'épaisseur de paroi des cloisons (16) de la structure alvéolée (13) à côté ou dans la zone des surfaces d'appui (14, 15) est de 0,45 mm à 0,6 mm et de préférence de 0,52 mm.

9. Pièce de pression (1) selon l'une des revendications précédentes, **caractérisée en ce que**
le matériau du corps de support (12) présente un acier à outils.

10. Pièce de pression (1) selon l'une des revendications précédentes, **caractérisée en ce que**
le matériau du corps de support (12) présente un acier de spécification 1.2709 ou X3NiCoMoTi18-9-5 et/ou un matériau à base de titane Ti6AI4V.

11. Pièce de pression (1) selon l'une des revendications précédentes, **caractérisée en ce que**
les surfaces d'appui (14, 15) sont formées à partir des faces frontales des cloisons (16).

12. Moule pour moulage par injection comportant au moins une pièce de pression (1) qui est conçue pour être agencée sur ou en liaison avec un corps de canal chaud (10) du moule pour moulage par injection, sur lequel au moins une buse de canal chaud (11) peut être montée, la pièce de pression (1) présentant un corps de support (12) destiné à absorber des forces agissant sur le corps de canal chaud (10),
- le corps de support (12) étant fabriqué au moyen d'un procédé de fabrication additive,
- le corps de support (12) présentant une structure alvéolée (13),
- **caractérisé en ce que**
la structure alvéolée (13) du corps de support (12) présente des cloisons (16) et des ouvertures (17) réalisées entre les cloisons (16),
- les cloisons (16) de la structure alvéolée (13) présentent une épaisseur de paroi qui augmente à partir d'une zone centrale en direction de surfaces d'appui (14, 15) de la pièce de pression (1).
